(19) Europäisches Patentamt
European Patent Office
Office européen des brevets

(11) Veröffentlichungsnummer: **0 149 815**
**A2**

# (12) EUROPÄISCHE PATENTANMELDUNG

(21) Anmeldenummer: **84115720.9**

(22) Anmeldetag: **18.12.84**

(51) Int. Cl.⁴: **C 08 L 25/00**

(30) Priorität: **20.01.84 DE 3401834**

(43) Veröffentlichungstag der Anmeldung: **31.07.85 Patentblatt 85/31**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Muench, Volker, Dr.**
**Luitpoldstrasse 114**
**6700 Ludwigshafen(DE)**

(72) Erfinder: **Hambrecht, Juergen, Dr.**
**Werderstrasse 30**
**6900 Heidelberg(DE)**

(72) Erfinder: **Naarmann, Herbert, Dr.**
**Haardtblik 15**
**6719 Wattenheim(DE)**

(72) Erfinder: **Echte, Adolf, Dr.**
**Leuschnerstrasse 42**
**6700 Ludwigshafen(DE)**

(72) Erfinder: **Illers, Karl Heinz, Dr.**
**Huttenstrasse 20**
**6701 Otterstadt(DE)**

## (54) Flammgeschützte thermoplastische Formmasse.

(57) Die Erfindung betrifft eine flammgeschützte thermoplastische Formmasse aus

A. einem ein vinylaromatisches Monomeres enthaltenden thermoplastischen Harz,
sowie zusätzlich aufweisend, auf jeweils 100 Gew.-Teile A,

B. 0 bis 100 Gew.-Teile eines Elastomeren mit einer Glastemperatur, Tg, $<0°C$ als Schlagzähmodifier,

C. 2 bis 50 Gew.-Teile einer Halogen enthaltenden organischen Verbindung (Flammschutzmittel),

D. 0,5 bis 20 Gew.-Teile einer Metall oder Nichtmetall enthaltenden Verbindung (Synergist) und

E. 5 bis 50 Gew.-Teile eines Novolaks (Phenol/Aldehyd-Harz).

Der Novolak wird aus Aldehyden der allgemeinen Formel (I)

$$R^1 - CHO \qquad (I),$$

in der bedeuten $R^1$ = H, $C_1$-$C_{10}$-Alkyl, Cycloalkyl oder $C_6$-$C_{12}$-Aryl- oder -Aryl-$C_1$-$C_3$-Alkyl, und Gemischen von Phenolen erhalten, wobei diese Gemische mindestens zwei einfach substituierte Phenole aufweisen und die Substituenten Alkylreste mit 1 bis 8 C-Atomen oder CN sein Können.

Die Formmasse wird zur Herstellung von flammgeschützten Formteilen verwendet.

EP 0 149 815 A2

Flammgeschützte thermoplastische Formmasse

Die Erfindung betrifft eine flammgeschützte thermoplastische Formmasse bestehend aus

A. wenigstens einem ein vinylaromatisches Monomeres enthaltenden thermoplastischen Harz,
sowie zusätzlich aufweisend, auf jeweils 100 Gew.-Teile A,

B. 0 bis 100 Gew.-Teile eines Elastomeren mit einer Glastemperatur, Tg, $<0°C$ als Schlagzähmodifier,

C. 2 bis 50 Gew.-Teile mindestens einer Halogen enthaltenden organischen Verbindung (Flammschutzmittel),

D. 0,5 bis 20 Gew.-Teile einer Metall oder Nichtmetall enthaltenden Verbindung (Synergist) und

E. 5 bis 50 Gew.-Teile eines Novolaks (Phenol/Aldehyd-Harz).

Die Flammfestausrüstung thermoplastischer Kunststoffe ist bekannt und z.B. in

(1) Vogel, "Flammfestmachen von Kunststoffen", Hüthig-Verlag (1966), Seiten 94-102,
(2) Troitzsch, "Brandverhalten von Kunststoffen", Hanser-Verlag (1982), Seiten 1-65,
(3) Hirschler, in "Developments in Polymer Stabilization", Band 5, Editor G. Scott, Applied Science Publishers, London (1982), Seiten 107-151

beschrieben.

So weiß man, daß bei Anwendung verhältnismäßig großer Mengen an Flammschutzmitteln und unter gleichzeitiger Verwendung von üblichen Synergisten die Thermoplaste nach Entzünden mit einer heißen Flamme nichtbrennend abtropfen und von selbst verlöschen [vgl. z.B. DE-OS 23 28 517 und 25 41 256]. Weiterhin ist bekannt, daß dieser Effekt ohne Synergist erst nach Zugabe einer weitaus größeren Flammschutzmittelmenge eintritt. Damit ausgerüstete Formmassen zeigen Nachteile, die vom Verarbeiter meist nicht toleriert werden. Charakteristisch sind z.B. die Verfärbung der Formmasse sowie die Korrosion von Verarbeitungsmaschinen, wenn Kombinationen von halogenhaltigen Flammschutzmitteln und Synergisten eingesetzt werden. Ohne Verwendung von Synergisten muß die Flammschutzmittelmenge erhöht wer-Vo/uw

den, was zu einer starken Beeinträchtigung der mechanischen Eigenschaften der damit ausgerüsteten Thermoplaste und aufgrund einer deutlichen Senkung der Wärmeformbeständigkeit, zu brennendem Abtropfen führt. Diese Probleme können mithin nur durch eine Senkung der Menge an halogenhaltigen Flammschutzmitteln gelöst werden. Häufig erreichen die Thermoplaste dann jedoch nicht mehr die Einstufung UL 94 V0 oder UL 94 V1.

Es ist deshalb verschiedentlich versucht worden, halogenhaltige Flammschutzmittel und die dazugehörigen Synergisten in thermoplastischen Werkstoffen durch andere flammhemmende Substanzen ganz oder teilweise zu ersetzen.

Zum Stand der Technik nennen wir die DE-OS 30 25 139.

In dieser Schrift werden Mischungen aus schlagzäh modifizierten Thermoplasten auf der Basis von Styrol, Halogen enthaltenden Flammschutzmitteln, Synergisten und Kohlenwasserstoff/Formaldehyd-Harzen beschrieben. Nach den Angaben der Autoren soll die Verwendung von Novolaken anstelle der Kohlenwasserstoff/Formaldehydharze zu fast keiner Verbesserung des flammhemmenden Verhaltens führen, so daß insgesamt keine wesentlichen Vorteile gegenüber der herkömmlichen Flammschutzmittelausrüstung existieren (vgl. Seite 7, 2. Absatz), was auch experimentell mit einem nicht näher definierten Novolak belegt wird (vgl. Vergleichsversuche 5 und 16 , Seiten 17 und 24).

Es bestand daher weiter die Aufgabe, die Menge an Halogen enthaltenden Flammschutzmitteln in durch Flammschutzmittel/Synergist-Kombinationen flammfest ausgerüsteten Vinylaromaten enthaltenden thermoplastischen Formmassen zu verringern, ohne daß die Formmasse die Einstufung UL 94 V1 oder UL 94 V0 verfehlt. Gleichzeitig sollte das Abtropfen der Mischung beim Beflammen und beim Nachbrennen verhindert werden.

Diese Aufgabe wird gelöst durch eine Formmasse gemäß Patentanspruch 1.

Die Erfindung betrifft daher eine flammgeschützte thermoplastische Formmasse bestehend aus

A. mindestens einem ein vinylaromatisches Monomeres enthaltenden thermoplastischen Harz,
sowie zusätzlich aufweisend, auf jeweils 100 Gew.-Teile A,

B. 0 bis 100 Gew.-Teile mindestens eines Elastomeren mit einer Glastemperatur, Tg, $< 0°C$ als Schlagzähmodifier,

C. 2 bis 50 Gew.-Teile mindestens einer Halogen enthaltenden organischen Verbindung (Flammschutzmittel),

D. 0,5 bis 20 Gew.-Teile mindestens einer Metall oder Nichtmetall enthaltenden Verbindung (Synergist) und

E. 5 bis 50 Gew.-Teile eines Novolaks (Phenol/Aldehyd-Harz).

Die Formmasse ist dadurch gekennzeichnet, daß Novolake verwendet werden, die aus Aldehyden der allgemeinen Formel (I)

$$R^1 - CHO \qquad (I),$$

in der bedeuten $R^1$ = H, $C_1$-$C_{10}$-Alkyl, Cycloalkyl oder $C_6$-$C_{12}$-Aryl- oder -Aryl-$C_1$-$C_3$-Alkyl, und Gemischen von Phenolen erhältlich sind, wobei diese Gemische mindestens zwei einfach substituierte Phenole aufweisen und die Substituenten Alkylreste mit 1 bis 8 C-Atomen oder CN sein können.

Nachstehend werden der Aufbau der erfindungsgemäßen Formmasse aus den Komponenten A bis E, deren Art bzw. Herstellung und die Herstellung der Formmasse beschrieben.

Die erfindungsgemäße Formmasse ist aus verschiedenen Komponenten A, C, D und E aufgebaut und kann gegebenenfalls noch einen Schlagzähmodifier, Komponente B, enthalten. Ferner kann sie, unabhängig davon ob 4 oder 5 Komponenten die Formmasse ausmachen, übliche Zusatzstoffe (Komponente F) in wirksamen Mengen enthalten.

Die erfindungsgemäße Formmasse besteht, bezogen auf 100 Gew.-Teile der Komponente A, aus

0 bis 100 Gew.-Teilen, vorzugsweise 5 bis 30 Gew.-Teilen und insbesondere 6 bis 25 Gew.-Teilen der Komponente B, sowie

2 bis 50 Gew.-Teilen, vorzugsweise 4 bis 40 Gew.-Teilen und insbesondere 4 bis 25 Gew.-Teilen der Komponente C,

0,5 bis 20 Gew.-Teilen, vorzugsweise 1 bis 15 Gew.-Teilen und insbesondere 2 bis 10 Gew.-Teilen der Komponente D und

5 bis 50 Gew.-Teilen, vorzugsweise 5 bis 40 Gew.-Teilen und insbesondere 10 bis 30 Gew.-Teilen der Komponente E.

Komponente A

Die Komponente A der erfindungsgemäßen Formmasse soll mindestens ein thermoplastisches, handelsübliches Harz sein. Dieses Harz kann ein Homo- oder Copolymerisat eines thermoplastischen Kunststoffes sein. Es können auch Mischungen verschiedener thermoplastischer Kunststoffe, die nachstehend aufgeführt sind, verwendet werden. Als thermoplastische Kunststoffe kommen in Betracht: Poly(ethylen), Poly(propylen), Poly(isobutylen), Poly(styrol), Copolymerisate des Styrols mit Acrylnitril, mit Maleinsäureanhydrid, mit Maleinsäureestern und mit Acrylsäureestern. Ferner sind geeignet Copolymerisate des Acrylnitrils mit $\alpha$-Methylstyrol. Es kommen ferner in Betracht Poly(amide), Poly(ester) und Poly(urethane).

Bevorzugt eingesetzt werden Poly(styrole) ($A_1$), wobei der Styrolbestandteil ($a_1$) zur Verbesserung der Wärmeformbeständigkeit ganz oder teilweise durch kernalkyliertes Styrol, insbesondere p-Methylstyrol, ersetzt sein kann. Besonders bevorzugt eingesetzt werden Copolymerisate des Styrols mit Acrylnitril ($a_2$), Maleinsäureanhydrid, Maleinsäureestern und Acrylsäureestern.

Für die Herstellung der erfindungsgemäßen Formmassen werden ganz besonders bevorzugt Styrol/Acrylnitril-Copolymerisate ($A_2$) angewendet; diese bestehen im wesentlichen aus 1 bis 50 Gew.% Acrylnitril ($a_2$) und 50 bis 99 Gew.% Styrol ($a_1$). Der Styrolbestandteil kann, um die Wärmeformbeständigkeit zu verbessern, ganz oder teilweise durch kernalkyiertes Styrol, insbesondere p-Methylstyrol, ersetzt sein. Styrol/Acrylnitril-Copolymerisate sind im Handel erhältlich und können z.B. nach der Lehre der DE-AS 10 01 001 bzw. DE-PS 1 003 436 hergestellt werden. Der Molekulargewichtsbereich der Copolymerisate kann $\bar{M}_w = 10^5$ bis $\bar{M}_w = 2,5 \times 10^5$ (Gewichtsmittel $\bar{M}_w$ aus Lichtstreuung) betragen.

Komponente B

Das zur Schlagzähmodifizierung der erfindungsgemäßen Formmassen eingesetzte Elastomer kann ein ungepfropfter Kautschuk ($B_1$) oder ein gepfropfter Kautschuk ($B_2$) sein.

Der Kautschuk ($B_1$) soll eine Glastemperatur (nach K.H. Illers und H. Breuer, Kolloid-Zeitschrift 176, (1961) Seite 110) haben, die unter 0°C liegt. Als Kautschuk kommen beispielsweise in Frage: Poly(butadien) (vgl. DE-OS 14 20 775 und DE-OS 14 95 089), Copolymerisate aus Butadien und Styrol (vgl. Brit. Patent 649 166), Copolymerisate aus Butadien und Styrol, Poly(acrylester), die gegebenenfalls vernetzt sein können (vgl.

DE-AS 11 38 921, DE-AS 12 24 486 oder DE-AS 12 60 135) sowie Copolymerisate aus Acrylsäureester und Butadien (vgl. DE-AS 12 38 207), ferner Elastomere von Copolymerisaten aus Acrylsäureestern mit Styrol, Acrylnitril und Vinylethern und Copolymerisate aus Ethylen, Propylen und einem nicht konjugierten Dien (EPDM-Kautschuke). Besonders bevorzugt wird Polybutadien ($B_1$).

Als gepfropfte Kautschuke ($B_2$) kommen in Frage: Pfropfmischpolymerisate, welche in Anteilen von 5 bis 50 Gew.%, insbesondere von 10 bis 45 Gew.%, jeweils bezogen auf die Mischung aus A und B, angewendet werden. Die Pfropfmischpolymerisate sind aufgebaut aus 10 bis 50 Gew.-Teilen, vorzugsweise 15 bis 45 Gew.-Teilen eines Gemisches aus mindestens einem vinylaromatischen Monomeren, das bis zu 12 Kohlenstoffatome enthält, und 0,1 bis 25 Gew.-Teilen, vorzugsweise 5 bis 20 Gew.-Teilen eines (Meth)acrylsäureesters und/oder von Acrylnitril als Pfropfhülle, auf 50 bis 90 Gew.--Teile, insbesondere 60 bis 80 Gew.-Teile einer elastomeren Pfropfgrundlage (Kautschukkomponente).

Die vinylaromatischen Pfropfmonomeren sind Styrol, α-Methylstyrol und/oder kernalkylierte Styrole mit bis zu 12 C-Atomen; als Monomere kommen (Meth)acrylsäureester von Alkanolen mit bis zu 8 C-Atomen, sowie Acrylnitril oder Mischungen davon in Betracht. Bevorzugt werden Pfropfmischpolymerisate von S/AN auf Polybutadien (ABS) oder auf Polyacrylat (ASA).

Die Herstellung der Pfropfmischpolymerisate ($B_2$) ist an sich bekannt. Sie können z.B. hergestellt werden durch Polymerisation eines Gemisches von Styrol und Acrylnitril und/oder (Meth)acrylaten in Gegenwart eines Kautschuks ($B_1$).

Als Pfropfkautschuke ($B_2$) kommen somit in Frage:

$B_{2a}$ 75 % Polybutadienkautschuk gepfropft mit
25 % Styrol/Acrylnitril im Verhältnis (90/10)

$B_{2b}$ 75 % Polybutadienkautschuk gepfropft mit
25 % Styrol/Acrylnitril im Verhältnis (83/17)

$B_{2c}$ 75 % Polybutadienkautschuk gepfropft mit
25 % Styrol/Acrylnitril im Verhältnis (75/25)

$B_{2d}$ 75 % Polybutadienkautschuk gepfropft mit
25 % Styrol/Acrylnitril im Verhältnis (70/30)

$B_{2e}$ 75 % eines Kautschuks aus 60 Teilen Acrylsäurebutylester und 40 Teilen Butadien, gepfropft mit 25 % Styrol/Acrylnitril im Verhältnis (70/30)

$B_{2f}$ 75 % Polybutadienkautschuk gepfropft mit 25 % Styrol/Acrylnitril im Verhältnis (70/30)

$B_{2g}$ 60 % Polybutadienkautschuk gepfropft mit 40 % Styrol/Acrylnitril im Verhältnis (65/35)

$B_{2h}$ 60 % Kautschuk, bestehend aus Butylacrylat und Dicyclopentadienacrylat im Verhältnis (98/2), gepfropft mit 40 % Styrol/Acrylnitril im Verhältnis (75:25)

$B_{2i}$ 75 % Kautschuk, bestehend aus Butylacrylat, 1,3-Butadien und Vinylmethylether im Verhältnis (57/38,5/4,5), gepfropft mit 25 % Styrol/Acrylnitril im Verhältnis (70/30).

Besonders bevorzugt eingesetzt wird $B_{2g}$.

In den erfindungsgemäßen Formmassen besonders bevorzugt eingesetzte Mischungen aus Komponente A und Komponente B sind demnach schlagfeste Styrol/Acrylnitril-Copolymerisate (SAN) und Acrylnitril-Butadien-Styrol--Blockcopolymerisate (ABS) sowie schlagzäh modifiziertes Poly(styrol) (HIPS). D.h. die Komponente B wird vorzugsweise in Form eines Pfropfmischpolymerisates aus den die Komponente A aufbauenden Monomeren angewendet.

Komponente C

Als Flammschutzmittel, Komponente C der erfindungsgemäßen Formmasse, kommen Halogen enthaltende organische Verbindungen, die in den Zitaten (1), (2) und (3) beschrieben sind, in Betracht. Geeignete Flammschutzmittel aus (1), (2) und (3) sind: Octabromhexadecan, chlorierte Paraffine, die etwa 70 Gew.% Chlor enthalten, halogenhaltige Diels-Alder-Addukte und halogenhaltige Diphenyle.

Für besondere Zwecke, nämlich um Ausblühungen vermeiden zu können, werden die kernhalogenierten Styrol-Oligomere, die 40 bis 80 Gew.% Halogen enthalten, und einen mittleren Polymerisationsgrad von 3 bis 200 aufweisen, angewendet. Deren Herstellung ist z.B. aus der DE-OS 25 37 385 bekannt.

Bevorzugt werden allgemein die organischen Bromverbindungen und hiervon die Bis(tribromphenoxi)-alkylene (vgl. DE-OS 23 28 517), hiervon insbesondere das Bis(tribromphenoxi)-ethan ($C_2$), sowie die Okta-, Nona- und Decabrom-Diphenyle bzw. die entsprechenden Diphenylether ($C_1$) und Tetrabrombisphenol-A ($C_3$). Besonders bevorzugt sind Gemische aus Diphenylethern die z.B. in der GB-PS 1 158 163 oder in der DE-AS 20 46 795 beschrieben sind und die im Handel angeboten werden.

Die genannten Flammschutzmittel können einzeln oder auch in Mischungen untereinander angewendet werden. Innerhalb des genannten Bereiches kann der für den jeweils verwendeten Thermoplasten günstigste Wert ohne weiteres vom Fachmann ermittelt werden.

Komponente D

Als Synergisten für die Halogen enthaltenden Flammschutzmittel in den erfindungsgemäßen Formmassen kommen vor allem Metallverbindungen wie $As_2O_3$, $Sb_2O_3$, $Bi_2O_3$, $SnO_2$, $Fe_2O_3$, Ferrocen, $Al_2O_3$, ZnO und deren Gemische sowie Nichtmetallverbindungen wie Hypophosphite und Borate in Frage. Bevorzugt eingesetzt wird $Sb_2O_3$ ($D_1$).

Komponente E

Bei der Komponente E der erfindungsgemäßen Formmasse handelt es sich um Phenol-/Aldehyd-Harze, welche durch die Kondensation von Phenolen und Aldehyden hergestellt werden und als Novolake bekannt sind. Besonders bevorzugt eingesetzt werden Novolake mit zahlenmittleren Molgewichten $\bar{M}_w$ von 500 bis 2000.

Die Darstellung von Novolaken wird beispielsweise in Houben/Weyl, "Methoden der organischen Chemie", Band 14, Teilband 2, Georg Thieme Verlag, Stuttgart, 1963, Seite 201ff. oder in Sørensen und Campbell, "Preparative Methods of Polymer Chemistry", Interscience Publishers, New York, 1968 beschrieben; thermodynamische Eigenschaften von Novolak/Polymer-Mischungen werden von Fahrenholtz und Kwei in Macromolecules, Band 14, Seiten 1076 bis 1079 (1981), angegeben.

Zur Darstellung von Novolaken eignen sich Aldehyde der allgemeinen Formel I

$$R^1 - CHO \qquad (I),$$

worin $R^1$ = H, $C_1$-$C_{10}$-Alkyl, Cycloalkyl oder $C_6$-$C_{12}$-Aryl- oder -Aryl-$C_1$--$C_3$-Alkyl, wie beispielsweise Formaldehyd, Acetaldehyd, n-Propanal, n-Butanal, i-Propanal, i-Butyraldehyd, 3-Methyl-n-butanal, Benzaldehyd,

p-Tolylaldehyd, 2-Phenylacetaldehyd u.a. Denkbar ist auch die Anwendung von Furfurylaldehyd. Besonders bevorzugt eingesetzt wird Formaldehyd.

Geeignet für die Umsetzung (Kondensation) mit den Aldehyden sind Phenolgemische, die mindestens zwei einfach substituierte Phenole aufweisen.

Als Phenole die einfach substituiert sind, kommen in Betracht: o-Kresol, m-Kresol, p-Kresol, p-tert.-Butyl-phenol, p-Octylphenol und o-Cyanophenol. Somit kommen als Substituenten für die Phenole Alkylreste mit 1 bis 8 C-Atomen oder CN- in Frage. Für die Umsetzung mit den Aldehyden werden binäre Phenol-Gemische aus z.B. o- und m-Kresol, oder aus Mischungen von jedem mit p-t-Butylphenol, p-Kresol, p-Octylphenol bzw. mit p-Cyanophenol angewendet. Am besten geeignet und daher bevorzugt werden Phenolgemische aus drei Bestandteilen und hiervon insbesondere Mischungen aus ortho-Kresol, meta-Kresol und p-tert.-Butylphenol oder p-Kresol. Die Zusammensetzung der Mischung der drei Phenole für die Kondensation mit insbesondere Formaldehyd kann in den Grenzen von, jeweils Mol.% bezogen auf die Mischung, 20 bis 80, insbesondere 60 bis 70 für o-Kresol, 10 bis 40, insbesondere 15 bis 20 für m-Kresol und 10 bis 40, insbesondere 10 bis 20 für p-tert.-Butylphenol oder p-Kresol liegen.

Beispiele für anwendbare Novolake aus Phenolgemischen ($E_2$) sind in der Tabelle 1 aufgeführt. Die Aufzählung dient der Illustration und beinhaltet keine Einschränkung. Die exakte Zusammensetzung ist nicht kritisch und kann innerhalb der angegebenen Grenzen variieren. Es gilt für die Berechnung einer Zusammensetzung: $\Sigma$ Mol.% = 100.

Tabelle 1: Novolake aus Phenolgemischen

| Basisphenol und Bezeichnung des Novolaks ( ) | m-Kresol (Mol-%) | p-Kresol (Mol-%) | p-t-Butylphenol (Mol-%) | o-Octylphenol (Mol-%) | p-Cyanophenol (Mol-%) |
|---|---|---|---|---|---|
| o-Kresol ($E_{2b1}$) | 10-90 | - | 5-40 | - | - |
| " ($E_{2b2}$) | 10-90 | - | 5-30 | - | 1-10 |
| " ($E_{2b3}$) | 10-40 | - | 5-30 | 5-10 | 1-5 |
| " ($E_{2b4}$) | 10-90 | 5-40 | - | - | - |
| m-Kresol ($E_{2c1}$) | - | - | 5-80 | - | - |
| " ($E_{2c2}$) | - | - | 10-50 | 15-20 | 1-10 |
| p-t-butylphenol ($E_{2d1}$) | - | - | - | 20-30 | 1-3 |

Besonders bevorzugt eingesetzt wird der gemischte Novolak $E_{2b1}$ oder $E_{2b4}$.

Komponente F

Die erfindungsgemäßen Formmassen können gegebenenfalls übliche Zusatzstoffe enthalten (Komponente F). Als Zusatzstoffe kommen bekannte und bewährte Stabilisatoren, wie sterisch gehinderte Phenole und organische Phosphite in Betracht, die jeweils einzeln oder zusammen angewendet werden. Die Menge des eingesetzten Stabilisators oder der Stabilisatormischung soll 0,01 bis 0,5 Gew.-Teile, bezogen auf 100 Gew.-Teile der Komponente A, betragen.

Ferner können Schwefel und/oder Schwefel enthaltende Antioxidantien wie Dithiocarbamatkomplexe, Xanthogensäuresalze, Thiazole und Zinksalze von Mercaptobenzimidazolen in üblichen Mengen von jeweils 0,01 bis 0,5 Gew.--Teilen, bezogen auf 100 Gew.-Teile A, eingesetzt werden.

Ferner sind anwendbar Füllstoffe, Farbpigmente, Gleitmittel, Weichmacher, Antistatika oder Treibmittel, weitere metallfreie Synergisten, wie Triphenylphosphat, Triphenylphosphinoxid in üblichen, dem Fachmann bekannten Mengen.

Die Einarbeitung des Flammschutzmittels, des Synergisten sowie der evtl. verwendeten Zusatzstoffe kann nach einem geeigneten und bekannten Mischverfahren, z.B. in Extrudern, Knetern oder Walzen erfolgen.

Insbesondere können die Komponenten B, C, D und E der erfindungsgemäßen Formmasse auch in Form eines Konzentrates in den gewünschten Thermoplasten in Granulat- oder Pulverform in einen weiteren Teil des Thermoplasten eingearbeitet werden, um die beabsichtigte Zusammensetzung zu erzielen.

Die erfindungsgemäßen Formmassen können durch Spritzgießen oder Strangpressen zu selbstverlöschenden Formkörpern oder Profilen verarbeitet werden.

Die erfindungsgemäßen Formmassen besitzen neben der Eigenschaft der Selbstverlöschung weitere gute Eigenschaften, wie Wärmeformbeständigkeit und Fließfähigkeit.

Die erfindungsgemäßen Formmassen widerlegen überraschenderweise eindeutig die in DE-OS 3 025 139 angegebene Lehre, daß der Einsatz von Novolaken anstelle von Kohlenwasserstoff/Formaldehyd-Harzen keine wesentlichen Vorteile gegenüber herkömmlichen, dem Stand der Technik entsprechenden Flammschutzausrüstungen mit sich bringt. Der Vergleich zwischen der Wirkung

der erfindungsgemäßen Novolake aus Mischungen von Phenolen und derjenigen der Kohlenwasserstoff/Formaldehyd-Harze zeigt nämlich eindeutig, das die in den erfindungsgemäßen Formmassen angewendeten Novolake das brennende und nichtbrennende Abtropfen effektiver verhindern als die in DE-OS 30 25 139 angegebenen Harze. Der Vergleich zeigt ferner, daß bei Verwendung der beanspruchten Novolake der zum Erreichen der Einstufung UL 94 V0 oder V1 notwendige Gehalt an Bromflammschutzmitteln niedriger ist, als bei Verwendung von Kohlenwasserstoff/Formaldehyd-Harzen. Ein weiterer wesentlicher und überraschender Vorteil der Ausrüstung mit Novolaken im Vergleich zu derjenigen mit Kohlenwasserstoff/Formaldehyd-Harzen nach DE-OS 30 25 139 ist die weitgehende Freiheit in der Wahl der Stabilisatoren: Ein besonders guter flammhemmender Effekt wird laut DE-OS 20 25 139 nur in Kombination mit Schwefel und/oder schwefelhaltigen Stabilisatoren erzielt; dies ist bei der erfindungsgemäßen Formmasse, die mit Novolaken auf Basis von Phenolgemischen ausgestattet ist, nicht der Fall.

Die in den Beispielen und Vergleichsversuchen beschriebenen Tests wurden wie folgt durchgeführt:

Die Flammschutzprüfung erfolgt im vertikalen Brandtest nach den Vorschriften der Underwriter Laboratories zwecks Einordnung in eine der Brandklassen UL 94 V0, UL 94 V1 oder UL 94 V2.

Diese Einstufungen bedeuten, daß Thermoplaste nach dem zweimaligen Entzünden mit einer heißen Flamme binnen maximal 5 Sekunden (V0) oder binnen maximal 25 Sekunden (V1) von selbst verlöschen und dabei gegebenenfalls nichtbrennend abtropfen. Zur genauen Vorschrift s. (2), Seite 398.

Für die Durchführung von Versuchen und Vergleichsversuchen wurden folgende Produkte hergestellt:

1. ein gemischter Novolak

11,34 kg o-Kresol, 2,754 kg m-Kresol und 2,925 kg p-t-Butylphenol, 5,392 kg Formalin (37 %ig in Wasser), 314,6 g Oxalsäure x 2 $H_2O$ und 540 g $CH_3OH$ wurden mit 30 l Wasser zugemischt und 24 h bei 95 bis 97°C gerührt. Nach 24 h wird die obere, wäßrige Phase abgehebert und die untere Phase mit 10 l Wasser gewaschen. Die untere, produkthaltige Phase wird abgelassen und die Lösungsmittel und ein Teil der leichtflüchtigen Phenole im Wasserstrahlvakuum abgezogen. Die verbleibende Schmelze wird bei 150°C und 0,2 bis 0,4 mbar von restlichem Phenol befreit. Die Schmelze wird auf einem Blech abgekühlt, zerkleinert und gemahlen.

Ausbeute: 10,3 kg;
Analyse: C 80 %; H 7 %; O 13,3 %;
Molgewicht (dampfdruckosmometrisch in Aceton): 800;
Bezeichnung: Novolak $E_{2b1}$;

Der Novolak $E_{2b4}$ wird nach analoger Vorschrift aus 63,18 kg p-Kresol, 82,62 kg m-Kresol, 340,2 kg o-Kresol und 320,4 kg Formalin (40 %ig in Wasser) unter Zusatz von 10 kg Oxalsäure und 35 kg $CH_3OH$ hergestellt.

Ausbeute: 400 kg;
Molgewicht (dampfdruckosmometrisch in Aceton): 1000

2. ein Xylol-Formaldehyd-Harz

Für die Durchführung der Vergleichsversuche wurde ein sauerstoffarmes Xylol/Formaldehyd-Harz nach US-PS 4 082 728 mit einem Sauerstoffgehalt m$<$1 Gew.% hergestellt. Wie durch kernresonanzspektroskopische Untersuchungen nachgewiesen werden konnte, enthielt das Polymere ausschließlich Methylenbrücken und keine Dimethylenetherbrücken ($-CH_2OCH_2-$).

Analyse: 0,4 % O;
Molgewicht (dampfdruckosmometrisch in Toluol): 1100;
Bezeichnung: XFH.

3. ein einfacher Novolak

Für die Durchführung von Vergleichsversuchen wurde ein Novolak aus Phenol und Formalin (37 %ig in Wasser) unter Zusatz von Oxalsäure (1 Mol.%) und Methanol hergestellt.

Ausbeute: 90 %, bezogen auf Phenol;
Molgewicht (dampfdruckosmometrisch in Aceton): 950;
Bezeichnung: Novolak $E_{1a}$

In gleicher Weise wurde ein o-Octylphenol-Novolak hergestellt.
Ausbeute: 85 %, bezogen auf p-Octylphenol;
Molgewicht (dampfdruckosmometrisch in Aceton): 860;
Bezeichnung: Novolak $E_{1b}$

Als erfindungsgemäß repräsentative Komponenten A, B, C, D, E und F werden eingesetzt [Abkürzungen am Ende z.B. (= PS) sind jeweils in Tabelle 2 benutzt]:

$A_1$ Standard-Poly(styrol), Viskositätszahl VZ = 119 (0,5 %ig in Toluol, DMF) (= PS);

$A_2$ Styrol/Acrylnitril-Copolymerisat (= SAN) mit 25 % Acrylnitril, VZ = 101 (0,5 %ig in DMF) (= SAN-1);

$A_{2a}$ SAN mit 35 % Acrylnitril, VZ = 104 (0,5 %ig in DMF) (= SAN-2);

$A_{2b}$ SAN mit 35 % Acrylnitril, VZ = 80 (0,5 %ig in DMF) (= SAN-3);

$B_1$ Poly(butadien)kautschuk (= PB);

$B_{2g}$ 60 % Poly(butadien)kautschuk, gepfropft mit 40 % Styrol/Acrylnitril im Verhältnis (65/35) (= PB 900);

$(A_1B_1)$ schlagzäh modifiziertes PS mit 8,07 % PB (= HIPS);

$(A_2B_{2g})$ schlagzäh modifiziertes SAN-3 mit 20 % PB 900 (= ABS-20);
und
schlagzäh modifiziertes SAN-3 mit 45 % PB 900 (= ABS-45);

$C_1$ Oktabromdiphenylether (= OBDP);

$C_2$ Bis(tribromphenoxi)ethan (= BTE);

$C_3$ Tetrabrombisphenol-A (= TBA);

$D_1$ Antimon(III)oxid (= $Sb_2O_3$);

$E_{1a}$ einfacher Novolak aus Phenol (= Novolak $E_{1a}$);

$E_{1b}$ einfacher Novolak aus p-Octylphenol (= Novolak $E_{1b}$);

$E_{2b1}$ gemischter Novolak aus o-Kresol (71 Mol-%) + m-Kresol (16 Mol-%) + p-t-Butylphenol (13 Mol-%) (= Novolak $E_{2b1}$);

$E_{2b4}$ gemischter Novolak aus o-Kresol (71 Mol-%) + m-Kresol (16 Mol-%) + p-Kresol (13 Mol-%) (= Novolak $E_{2b4}$);

$E_3$ Xylol/Formaldehyd-Harz nach DE-OS 3 025 139 und US-PS 4 082 728 (= XFH);

$F_1$ 2,6-Di-t-butylkresol (= DBK);

$F_2$ Tris(nonylphenyl)phosphit (= TNPP);

$F_3$ Tris(2,4-di-t-butylphenyl)phosphit (= TDBP).

Beispiele 1 bis 17 und Vergleichsversuche 18 bis 72

Die Erfindung wird nachstehend anhand der Beispiele näher erläutert. Die in den Beispielen und Versuchen genannten Prozente beziehen sich, sofern nichts anderes vermerkt ist, auf das Gewicht der jeweils betrachteten Gesamtmischung.

Die in der Tabelle 2 angegebenen Mengen in Gew.% an Flammschutzmittel (Komponente C), Synergist (Komponente D), Novolak (Komponente E) und gegebenenfalls weiteren Zusätzen (Komponente F) wurden in einem Fluidmischer der Fa. Henschel, Kassel, bei 40°C vermengt. Das Gemisch aus diesen Komponenten wurde dann mit den in der Tabelle angegebenen Mengen in Gew.% an thermoplastischen harzen (Komponente A) oder schlagzäh modifizierten thermoplastischen Harzen (Komponenten A+B) auf einem Extruder bei 230°C aufgeschmolzen, homogenisiert und anschließend granuliert.

Tabelle 2: Beispiele 1 bis 17 und Vergleichsversuche 18 bis 72

| Beispiele (erfindungsgemäß) | Komponenten A Thermoplastisches Harz | B Elastomer | C Flammschutzmittel OBDP | BTE | TBA | D Synergist $Sb_2O_3$ | E Formaldehyd-Harz | F Stabilisator | Einstufung nach UL 94 | Abtropfen nicht brennend | brennend |
|---|---|---|---|---|---|---|---|---|---|---|---|
| Nr. | Gew.% | Gew.% | Gew.% | Gew.% | Gew.% | Gew.% | Gew.% | Gew.% | | | |
| | HIPS | | | | | | | | | | |
| 1 | PS 75,38 | PB 6,62 | 6 | 0 | 0 | 2 | Novolak $E_{2b1}$ 10 | 0 | VO | nein | nein |
| 2 | PS 75,38 | PB 6,62 | 0 | 6 | 0 | 2 | Novolak $E_{2b4}$ 10 | 0 | VO | nein | nein |
| 3 | PS 76,12 | PB 6,68 | 0 | 2 | 3 | 2 | Novolak $E_{2b1}$ 10 | TNPP 0,2 | VO | nein | nein |
| | SAN | | | | | | | | | | |
| 4 | SAN-1 86 | 0 | 3 | 0 | 0 | 1 | Novolak $E_{2b4}$ 10 | 0 | V1 | nein | nein |
| 5 | SAN-1 86 | 0 | 0 | 0 | 3 | 1 | Novolak $E_{2b1}$ 10 | 0 | VO | nein | nein |
| 6 | SAN-1 86 | 0 | 0 | 0 | 2,7 | 1 | Novolak $E_{2b4}$ 10 | DBK 0,3 | VO | nein | nein |
| 7 | SAN-2 83,5 | 0 | 5 | 0 | 0 | 1,5 | Novolak $E_{2b1}$ 10 | 0 | V1 | nein | nein |
| 8 | SAN-2 84,5 | 0 | 0 | 0 | 4 | 1,5 | Novolak $E_{2b4}$ 10 | 0 | VO | nein | nein |
| 9 | SAN-2 84,5 | 0 | 0 | 0 | 3,8 | 1,4 | Novolak $E_{2b4}$ 10 | TNPP 0,3 | VO | nein | nein |
| 10 | SAN-3 83,5 | 0 | 5 | 0 | 0 | 1,5 | Novolak $E_{2b4}$ 10 | 0 | VO | nein | nein |
| 11 | SAN-3 83,5 | 0 | 0 | 2 | 3 | 1,5 | Novolak $E_{2b1}$ 10 | 0 | VO | nein | nein |

Tabelle 2: Fortsetzung

| Beispiele (erfindungsgemäß) Nr. | Komponenten A Thermoplastisches Harz Gew.% | B Elastomer Gew.% | C Flammschutzmittel OBDP Gew.% | BTE Gew.% | TBA Gew.% | D Synergist $Sb_2O_3$ Gew.% | E Formaldehyd-Harz Gew.% | F Stabilisator Gew.% | Einstufung nach UL 94 | Abtropfen nicht brennend | brennend |
|---|---|---|---|---|---|---|---|---|---|---|---|
| | ABS-20 | | | | | | | | | | |
| 12 | SAN-3 63,2 | PB 900 15,8 | 8 | 0 | 0 | 3 | Novolak $E_{2b4}$ 10 | 0 | V0 | nein | nein |
| 13 | SAN-3 61,6 | PB 900 15,4 | 6 | 0 | 0 | 2 | Novolak $E_{2b1}$ 10 | 0 | V0 | nein | nein |
| 14 | SAN-3 64,4 | PB 900 16,1 | 7 | 0 | 0 | 2 | Novolak $E_{2b4}$ 10 | TDBP 0,5 | V0 | nein | nein |
| | ABS-45 | | | | | | | | | | |
| 15 | SAN-3 45,65 | PB 900 37,35 | 0 | 0 | 5 | 2 | Novolak $E_{2b4}$ 10 | 0 | V1 | nein | nein |
| 16 | SAN-3 43,45 | PB 900 35,55 | 0 | 4 | 3 | 2 | Novolak $E_{2b4}$ 10 | 0 | V0 | nein | nein |
| 17 | SAN-3 43,45 | PB 900 35,55 | 8 | 0 | 0 | 3 | Novolak $E_{2b1}$ 10 | 0 | V0 | nein | nein |
| Vergleichsbeisp. | HIPS | | | | | | | | | | |
| 18 | PS 73,54 | PB 6,46 | 20 | 0 | 0 | 0 | 0 | 0 | V2 | ja | ja |
| 19 | PS 78,13 | PB 6,87 | 10 | 0 | 0 | 5 | 0 | 0 | V0 | nein | nein |

Tabelle 2: Fortsetzung

| Beispiele (erfindungsgemäß) | Komponenten | | | | | | | | Einstufung nach UL 94 | Abtropfen | |
|---|---|---|---|---|---|---|---|---|---|---|---|
| | A Thermoplastisches Harz | B Elastomer | C Flammschutzmittel | | | D Synergist $Sb_2O_3$ | E Formaldehyd-Harz | F Stabilisator | | nicht brennend | brennend |
| | | | OBDP | BTE | TBA | | | | | | |
| Nr. | Gew.% | Gew.% | Gew.% | Gew.% | Gew.% | Gew.% | Gew.% | Gew.% | | | |
| 20 | PS 74,46 | PB 6,54 | 6 | 0 | 0 | 3 | Novolak $E_{1a}$ 10 | 0 | keine | ja | ja |
| 21 | PS 74,46 | PB 6,54 | 6 | 0 | 0 | 3 | XFH 10 | 0 | keine | ja | ja |
| 22 | PS 72,62 | PB 6,38 | 8 | 0 | 0 | 3 | XFH 10 | 0 | keine | ja | ja |
| 23 | PS 82,27 | PB 7,23 | 0 | 0 | 7,5 | 3 | 0 | 0 | keine | ja | ja |
| 24 | PS 73,08 | PB 6,42 | 0 | 0 | 7,5 | 3 | Novolak $E_{1b}$ 10 | 0 | keine | ja | ja |
| 25 | PS 73,08 | PB 6,42 | 0 | 0 | 7,5 | 3 | XFH 10 | 0 | keine | ja | ja |
| 26 | PS 79,05 | PB 6,95 | 0 | 0 | 11 | 3 | 0 | 0 | keine | ja | ja |
| 27 | PS 73,54 | PB 6,46 | 0 | 0 | 11 | 3 | Novolak $E_{1a}$ 6 | 0 | keine | ja | ja |
| 28 | PS 73,54 | PB 6,46 | 0 | 0 | 11 | 3 | XFH 6 | 0 | keine | ja | ja |
| 29 | PS 71,7 | PB 6,3 | 0 | 0 | 11 | 3 | XFH 8 | 0 | keine | ja | ja |
| 30 | PS 69,86 | PB 6,14 | 0 | 0 | 11 | 3 | XFH 10 | 0 | V2 | ja | ja |
| 31 | PS 69,86 | PB 6,14 | 0 | 11 | 0 | 3 | Novolak $E_{1b}$ 10 | 0 | V2 | ja | ja |

Tabelle 2: Fortsetzung

| Beispiele (erfindungsgemäß) Nr. | Komponenten A Thermoplastisches Harz Gew.% | B Elastomer Gew.% | C Flammschutzmittel OBDP Gew.% | C BTE Gew.% | C TBA Gew.% | D Synergist $Sb_2O_3$ Gew.% | E Formaldehyd-Harz Gew.% | F Stabilisator Gew.% | Einstufung nach UL 94 | Abtropfen nicht brennend | Abtropfen brennend |
|---|---|---|---|---|---|---|---|---|---|---|---|
| | SAN | | | | | | | | | | |
| 32 | SAN-1 90 | 0 | 10 | 0 | 0 | 0 | 0 | 0 | V2 | ja | ja |
| 33 | SAN-1 93,5 | 0 | 5 | 0 | 0 | 1,5 | 0 | 0 | V2 | ja | ja |
| 34 | SAN-1 83,5 | 0 | 5 | 0 | 0 | 1,5 | Novolak $E_{1a}$ 10 | 0 | keine | ja | ja |
| 35 | SAN-1 83,5 | 0 | 5 | 0 | 0 | 1,5 | XFH 10 | 0 | keine | ja | ja |
| 36 | SAN-1 94 | 0 | 0 | 0 | 6 | 0 | 0 | 0 | V2 | ja | ja |
| 37 | SAN-1 95 | 0 | 0 | 0 | 4 | 1 | 0 | 0 | V2 | ja | ja |
| 38 | SAN-1 85 | 0 | 0 | 0 | 4 | 1 | Novolak $E_{1b}$ 10 | 0 | keine | ja | ja |
| 39 | SAN-1 85 | 0 | 0 | 0 | 4 | 1 | XFH 10 | 0 | keine | ja | ja |
| 40 | SAN-1 82,5 | 0 | 0 | 6 | 0 | 1,5 | XFH 10 | 0 | V2 | ja | ja |
| 41 | SAN-3 88 | 0 | 12 | 0 | 0 | 0 | 0 | 0 | V2 | ja | ja |
| 42 | SAN-3 | 0 | 8 | 0 | 0 | 1,5 | 0 | 0 | V1 | ja | nein |

Tabelle 2: Fortsetzung

| Beispiele (erfindungsgemäß) Nr. | Komponenten A Thermoplastisches Harz Gew.% | B Elastomer Gew.% | C Flammschutzmittel OBDP Gew.% | BTE Gew.% | TBA Gew.% | D Synergist $Sb_2O_3$ Gew.% | E Formaldehyd-Harz Gew.% | F Stabilisator Gew.% | Einstufung nach UL 94 | Abtropfen nicht brennend | Abtropfen brennend |
|---|---|---|---|---|---|---|---|---|---|---|---|
| 43 | SAN-3 81,5 | 0 | 8 | 0 | 0 | 1,5 | XFH 10 | 0 | V2 | ja | ja |
| 44 | SAN-3 81,5 | 0 | 8 | 0 | 0 | 1,5 | Novolak $E_{1b}$ 10 | 0 | V2 | ja | ja |
| 45 | SAN-3 88 | 0 | 8 | 2 | 0 | 2 | 0 | 0 | V0 | ja | nein |
| 46 | SAN-3 78 | 0 | 8 | 2 | 0 | 2 | XFH 10 | 0 | V0 | ja | nein |
| 47 | SAN-3 78 | 0 | 8 | 2 | 0 | 2 | Novolak $E_{1a}$ 10 | 0 | V1 | ja | nein |
| 48 | SAN-3 90 | 0 | 0 | 0 | 10 | 0 | 0 | 0 | V2 | ja | ja |
| 49 | SAN-3 92 | 0 | 0 | 0 | 6 | 2 | 10 | 0 | V2 | ja | ja |
| 50 | SAN-3 | 0 | 0 | 0 | 6 | 2 | XFH 10 | 0 | V2 | ja | ja |
| 51 | SAN-2 84 | 0 | 16 | 0 | 0 | 0 | 0 | 0 | V2 | ja | ja |
| 52 | SAN-2 87 | 0 | 10 | 0 | 0 | 3 | 0 | 0 | V1 | ja | nein |
| 53 | SAN-2 80 | 0 | 8 | 0 | 0 | 2 | Novolak $E_{1a}$ 10 | 0 | V2 | ja | ja |
| 54 | SAN-2 | 0 | 8 | 0 | 0 | 2 | Novolak $E_{1a}$ 10 | 0 | V2 | ja | ja |

Tabelle 2: Fortsetzung

| Beispiele (erfindungsgemäß) | Komponenten | | | | | | | | Einstufung nach UL 94 | Abtropfen | |
|---|---|---|---|---|---|---|---|---|---|---|---|
| | A Thermoplastisches Harz | B Elastomer | C Flammschutzmittel | | | D Synergist $Sb_2O_3$ | E Formaldehyd-Harz | F Stabilisator | | nicht brennend | brennend |
| | | | OBDP | BTE | TBA | | | | | | |
| Nr. | Gew.% | Gew.% | Gew.% | Gew.% | Gew.% | Gew.% | Gew.% | Gew.% | | | |
| | ABS-20 | | | | | | | | | | |
| 55 | SAN-3 64 | PB 900 16 | 20 | 0 | 0 | 0 | 0 | 0 | V1 | ja | nein |
| 56 | SAN-3 63,2 | PB 900 15,8 | 16 | 0 | 0 | 5 | 0 | 0 | V1 | ja | nein |
| 57 | SAN-3 60,8 | PB 900 15,2 | 10 | 0 | 0 | 4 | XFH 10 | 0 | V1 | ja | nein |
| 58 | SAN-3 60,8 | PB 900 15,2 | 10 | 0 | 0 | 4 | Novolak $E_{1a}$ 10 | 0 | V2 | ja | ja |
| 59 | SAN-3 58,4 | PB 900 14,6 | 15 | 0 | 0 | 4 | XFH 8 | 0 | V0 | ja | nein |
| 60 | SAN-3 60 | PB 900 15 | 0 | 0 | 25 | 0 | 0 | 0 | V1 | ja | nein |
| 61 | SAN-3 62,4 | PB 900 15,6 | 0 | 0 | 18 | 4 | 0 | 0 | V1 | ja | nein |
| 62 | SAN-3 59,2 | PB 900 14,8 | 0 | 0 | 12 | 4 | XFH 10 | 0 | V1 | ja | nein |
| 63 | SAN-3 59,2 | PB 900 14,8 | 0 | 0 | 12 | 4 | Novolak $E_{1b}$ 10 | 0 | V1 | ja | nein |
| | ABS-45 | | | | | | | | | | |
| 64 | SAN-3 44 | PB 900 36 | 20 | 0 | 0 | 0 | 0 | 0 | V1 | ja | nein |
| 65 | SAN-3 43,45 | PB 900 35,55 | 16 | 0 | 0 | 5 | 0 | 0 | V0 | nein | nein |

Tabelle 2: Fortsetzung

| Beispiele (erfindungsgemäß) | Komponenten | | | | | | | | Einstufung nach UL 94 | Abtropfen | |
|---|---|---|---|---|---|---|---|---|---|---|---|
| | A Thermoplastisches Harz | B Elastomer | C Flammschutzmittel | | | D Synergist $Sb_2O_3$ | E Formaldehyd-Harz | F Stabilisator | | nicht brennend | brennend |
| | | | OBDP | BTE | TBA | | | | | | |
| Nr. | Gew.% | Gew.% | Gew.% | Gew.% | Gew.% | Gew.% | Gew.% | Gew.% | | | |
| 66 | SAN-3 41,8 | PB 900 34,2 | 10 | 0 | 0 | 4 | Novolak $E_{1a}$ 10 | 0 | keine | ja | ja |
| 67 | SAN-3 41,25 | PB 900 33,75 | 10 | 0 | 0 | 4 | Novolak $E_{1a}$ 10 | TNPP 1 | keine | ja | ja |
| 68 | SAN-3 41,8 | PB 900 34,2 | 10 | 0 | 0 | 4 | XFH 10 | 0 | keine | ja | ja |
| 69 | SAN-3 41,25 | PB 900 33,75 | 10 | 0 | 0 | 4 | XFH 10 | TNPP 1 | keine | ja | ja |
| 70 | SAN-3 44 | PB 900 36 | 0 | 0 | 20 | 0 | 0 | 0 | keine | ja | ja |
| 71 | SAN-3 39,6 | PB 900 32,4 | 0 | 0 | 14 | 4 | Novolak $E_{1b}$ 10 | 0 | keine | ja | ja |
| 72 | SAN-3 39,6 | PB 900 32,4 | 0 | 0 | 14 | 4 | XFH 10 | 0 | keine | ja | ja |

Patentansprüche

1. Flammgeschützte thermoplastische Formmasse, bestehend aus

A. mindestens einem ein vinylaromatisches Monomeres enthaltenden thermoplastischen Harz,
sowie zusätzlich aufweisend, auf jeweils 100 Gew.-Teile A,

B. 0 bis 100 Gew.-Teile mindestens eines Elastomeren mit einer Glastemperatur, Tg, $< 0°C$ als Schlagzähmodifier,

C. 2 bis 50 Gew.-Teile mindestens einer Halogen enthaltenden organischen Verbindung (Flammschutzmittel),

D. 0,5 bis 20 Gew.-Teile mindestens einer Metall oder Nichtmetall enthaltenden Verbindung (Synergist) und

E. 5 bis 50 Gew.-Teile eines Novolaks (Phenol/Aldehyd-Harz).

dadurch gekennzeichnet, daß Novolake verwendet werden, die aus Aldehyden der allgemeinen Formel (I)

$$R^1 - CHO \qquad (I),$$

in der bedeuten $R^1$ = H, $C_1$-$C_{10}$-Alkyl, Cycloalkyl oder $C_6$-$C_{12}$-Aryl- oder -Aryl-$C_1$-$C_3$-Alkyl, und Gemischen von Phenolen erhältlich sind, wobei diese Gemische mindestens zwei einfach substituierte Phenole aufweisen und die Substituenten Alkylreste mit 1 bis 8 C-Atomen oder CN sein können.

2. Flammgeschützte thermoplastische Formmasse, bestehend aus

A. mindestens einem thermoplastischen Harz, das Styrol oder kernalkylierte Styrole oder Mischungen daraus einpolymerisiert enthält, sowie zusätzlich aufweisend, auf jeweils 100 Gew.-Teile A,

B. 0 bis 100 Gew.-Teile mindestens eines Elastomeren mit einer Glastemperatur, Tg, $< 0°C$ als Schlagzähmodifier,

C. 2 bis 50 Gew.-Teile mindestens einer Halogen enthaltenden organischen Verbindung (Flammschutzmittel),

D. 0,5 bis 20 Gew.-Teile mindestens einer Metall oder Nichtmetall enthaltenden Verbindung (Synergist) und

E. 5 bis 50 Gew.-Teile eines Novolaks (Phenol/Aldehyd-Harz).

dadurch gekennzeichnet, daß Novolake verwendet werden, die aus Aldehyden der allgemeinen Formel (I)

$$R^1 - CHO \qquad (I),$$

in der bedeuten $R^1$ = H, $C_1$-$C_{10}$-Alkyl, Cycloalkyl oder $C_6$-$C_{12}$-Aryl- oder -Aryl-$C_1$-$C_3$-Alkyl, und Gemischen von Phenolen erhältlich sind, wobei diese Gemische mindestens zwei einfach substituierte Phenole aufweisen und die Substituenten Alkylreste mit 1 bis 8 C-Atomen oder CN sein können.

3. Flammgeschützte thermoplastische Formmasse nach Anspruch 2, bestehend aus

A. mindestens einem thermoplastischen Harz, das Styrol oder kernalkylierte Styrole oder Mischungen einpolymersiert enthält, sowie zusätzlich aufweisend, auf jeweils 100 Gew.-Teile A,

B. 5 bis 30 Gew.-Teile eines Elastomeren mit einer Glastemperatur, Tg, $< 0°C$ als Schlagzähmodifier, in Form eines Pfropfmischpolymerisats aus den die Komponente A aufbauenden Monomeren,

C. 2 bis 50 Gew.-Teile mindestens einer Halogen enthaltenden organischen Verbindung (Flammschutzmittel),

D. 0,5 bis 20 Gew.-Teile mindestens einer Metall oder Nichtmetall enthaltenden Verbindung (Synergist) und

E. 5 bis 50 Gew.-Teile eines Novolaks (Phenol/Aldehyd-Harz).

dadurch gekennzeichnet, daß Novolake verwendet werden, die aus Aldehyden der allgemeinen Formel (I)

$$R^1 - CHO \qquad (I),$$

in der bedeuten $R^1$ = H, $C_1$-$C_{10}$-Alkyl, Cycloalkyl oder $C_6$-$C_{12}$-Aryl- oder -Aryl-$C_1$-$C_3$-Alkyl, und Gemischen von Phenolen erhältlich sind, wobei diese Gemische mindestens zwei einfach substituierte Phenole

aufweisen und die Substituenten Alkylreste mit 1 bis 8 C-Atomen oder CN sein können.

4. Flammgeschützte thermoplastische Formmasse, bestehend aus

A. mindestens einem thermoplastischen Harz, das 50 bis 99 Gew.% Styrol oder kernalkylierte Styrole oder Mischungen daraus, und 1 bis 50 Gew.% Acrylnitril einpolymerisiert enthält sowie zusätzlich aufweisend, auf jeweils 100 Gew.-Teile A,

B. 0 bis 100 Gew.-Teile mindestens eines Elastomeren mit einer Glastemperatur, Tg, $< 0°C$ als Schlagzähmodifier,

C. 2 bis 50 Gew.-Teile mindestens einer Halogen enthaltenden organischen Verbindung (Flammschutzmittel),

D. 0,5 bis 20 Gew.-Teile mindestens einer Metall oder Nichtmetall enthaltenden Verbindung (Synergist) und

E. 5 bis 50 Gew.-Teile eines Novolaks (Phenol/Aldehyd-Harz).

dadurch gekennzeichnet, daß Novolake verwendet werden, die aus Aldehyden der allgemeinen Formel (I)

$$R^1 - CHO \qquad (I),$$

in der bedeuten $R^1$ = H, $C_1$-$C_{10}$-Alkyl, Cycloalkyl oder $C_6$-$C_{12}$-Aryl- oder -Aryl-$C_1$-$C_3$-Alkyl, und Gemischen von Phenolen erhältlich sind, wobei diese Gemische mindestens zwei einfach substituierte Phenole aufweisen und die Substituenten Alkylreste mit 1 bis 8 C-Atomen oder CN sein können.

5. Flammgeschützte thermoplastische Formmasse nach Anspruch 4, bestehend aus

A. mindestens einem thermoplastischen Harz, das 50 bis 99 Gew.% Styrol oder kernalkylierte Styrole oder Mischungen daraus, und 1 bis 50 Gew.% Acrylnitril einpolymerisiert enthält, sowie zusätzlich aufweisend, auf jeweils 100 Gew.-Teile A,

B. 5 bis 30 Gew.-Teile mindestens eines Elastomeren mit einer Glastemperatur, Tg, $< 0°C$ als Schlagzähmodifier, in Form eines Pfropfmischpolymerisates aus den die Komponente A aufbauenden Monomeren,

C. 2 bis 50 Gew.-Teile mindestens einer Halogen enthaltenden organischen Verbindung (Flammschutzmittel),

D. 0,5 bis 20 Gew.-Teile mindestens einer Metall oder Nichtmetall enthaltenden Verbindung (Synergist) und

E. 5 bis 50 Gew.-Teile eines Novolaks (Phenol/Aldehyd-Harz).

dadurch gekennzeichnet, daß Novolake verwendet werden, die aus Aldehyden der allgemeinen Formel (I)

$$R^1 - CHO \qquad (I),$$

in der bedeuten $R^1$ = H, $C_1$-$C_{10}$-Alkyl, Cycloalkyl oder $C_6$-$C_{12}$-Aryl- oder -Aryl-$C_1$-$C_3$-Alkyl, und Gemischen von Phenolen erhältlich sind, wobei diese Gemische mindestens zwei einfach substituierte Phenole aufweisen und die Substituenten Alkylreste mit 1 bis 8 C-Atomen oder CN sein können.

6. Flammgeschützte thermoplastische Formmasse, bestehend aus

A. mindestens einem thermoplastischen Harz, das 50 bis 99 Gew.% Styrol oder kernalkylierte Styrole oder Mischungen daraus, und 1 bis 50 Gew.% Acrylnitril einpolymerisiert enthält sowie zusätzlich aufweisend, auf jeweils 100 Gew.-Teile A,

B. 5 bis 30 Gew.-Teile Polybutadien oder eines mindestens 50 Gew.% Acrylester aufweisenden Kautschuks als Schlagzähmodifier, in Form eines Pfropfmischpolymerisates aus den die Komponente A aufbauenden Monomeren,

C. 2 bis 50 Gew.-Teile mindestens einer Halogen enthaltenden organischen Verbindung (Flammschutzmittel),

D. 0,5 bis 20 Gew.-Teile mindestens einer Metall oder Nichtmetall enthaltenden Verbindung (Synergist) und

E. 5 bis 50 Gew.-Teile eines Novolaks (Phenol/Aldehyd-Harz).

dadurch gekennzeichnet, daß Novolake verwendet werden, die aus Aldehyden der allgemeinen Formel (I)

$$R^1 - CHO \qquad (I),$$

in der bedeuten $R^1$ = H, $C_1$-$C_{10}$-Alkyl, Cycloalkyl oder $C_6$-$C_{12}$-Aryl- oder -Aryl-$C_1$-$C_3$-Alkyl, und Gemischen von Phenolen erhältlich sind, wobei diese Gemische mindestens zwei einfach substituierte Phenole aufweisen und die Substituenten Alkylreste mit 1 bis 8 C-Atomen oder CN sein können.

7. Formmasse nach Anspruch 1, dadurch gekennzeichnet, daß Novolake verwendet werden, die aus Formaldehyd und Gemischen von Phenolen erhalten worden sind.

8. Formmasse nach Anspruch 1, dadurch gekennzeichnet, daß Novolake verwendet werden, die aus einem Phenolgemisch erhalten worden sind, das, jeweils bezogen auf die Summe des Gemisches 20 bis 80 Mol.% ortho-Kresol, 10 bis 40 Mol.% meta-Kresol und 10 bis 40 Mol.% p-tert.Butylphenol oder p-Kresol aufweist.

9. Verwendung der Formmasse gemäß Anspruch 1 zur Herstellung von Formteilen.

10. Formteile aus Formmassen gemäß Anspruch 1.